(19) Europäisches Patentamt
European Patent Office
Office européen des brevets

(11) **EP 1 890 387 A1**

(12) **EUROPÄISCHE PATENTANMELDUNG**

(43) Veröffentlichungstag:
**20.02.2008 Patentblatt 2008/08**

(51) Int Cl.:
*H04B 1/04* (2006.01)     *G06K 19/07* (2006.01)

(21) Anmeldenummer: **07015590.8**

(22) Anmeldetag: **08.08.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **18.08.2006 DE 102006038936**

(71) Anmelder: **ATMEL Germany GmbH
74072 Heilbronn (DE)**

(72) Erfinder: **Rebholz-Goldmann, Peter
74196 Neustadt (DE)**

(74) Vertreter: **Müller, Wolf-Christian
Patentanwalt
Maaßstraße 32/1
69123 Heidelberg (DE)**

(54) **Schaltregler, Transceiverschaltung und schlüsselloses Zugangskontrollsystem**

(57) Die Erfindung betrifft einen Schaltregler zur Ansteuerung von Sendeantennen variabler Impedanz, insbesondere von Sendeantennen eines schlüssellosen Zugangsberechtigungssystems in oder für ein Fahrzeug, mit einem Eingangsanschluss, in den ein an der Sendeantenne anliegenden oder anlegbares Antennenpotenzial einkoppelbar ist, mit einer Regelschaltung, die dazu ausgelegt ist, ein Kompensationssignal als Regelgröße zur Anpassung des Antennenpotenzials an eine aktuelle Ausgangsimpedanz zu erzeugen und eine Steigung des Kompensationssignals abhängig von dem aktuellen Antennenpotenzial einzustellen. Die Erfindung betrifft ferner eine Transceiverschaltung mit einem solchen Schaltregler sowie ein schlüsselloses Zugangskontrollsystem in oder für ein Fahrzeug.

FIG. 2

EP 1 890 387 A1

**Beschreibung**

Die Erfindung betrifft einen Schaltregler zur Ansteuerung von Sendeantennen variabler Impedanz, insbesondere von Sendeantennen eines schlüssellosen Zugangsberechtigungssystems in oder für ein Fahrzeug, eine Transceiverschaltung mit einem solchen Schaltregler sowie ein schlüsselloses Zugangskontrollsystem in oder für ein Fahrzeug.

Die Erfindung sowie die ihr zugrunde liegende Problematik wird nachfolgend mit Bezug auf ein schlüsselloses Zugangskontrollsystem in einem Kraftfahrzeug (KFZ) beschrieben, jedoch ohne die Erfindung dahingehend zu beschränken. Insbesondere sei bereits jetzt darauf hingewiesen, dass die Erfindung selbstverständlich auch für andere Anwendungen anwendbar ist, beispielsweise bei Schaltnetzteilen.

Moderne elektronische Diebstahlschutzsysteme in einem KFZ umfassen ein Zugangsberechtigungssystem, beispielsweise eine mit einem mechanischen oder elektronischen Schlüssel aktivierbare Zentralverriegelung. Moderne Zugangsberechtigungssysteme in KFZs ermöglichen zusätzlich oder alternativ auch einen schlüssellosen Zugang. Ein solches System ist beispielsweise das von der Firma ATMEL Germany GmbH entwickelte und vertriebene schlüssellose Zugangssystem mit dem Namen "Adrima", welches mit einer so genannten passiven Zugangskontrolle ("passive access") arbeitet. Bei der passiven Zugangskontrolle wird ein Frage-Antwort-Dialog ausgelöst, wenn sich ein Benutzer seinem KFZ nähert. Dabei wird ein Anfragesignal von einem Sender mit einer Sendeantenne im KFZ zu einem von dem Benutzer getragenen Transponder gesendet. Dieser sendet für den Fall, dass er das Anfragesignal empfängt, ein z.B. kryptologisch codiertes Antwortsignal. Im KFZ wird dieses Antwortsignal über eine Empfangsantenne aufgenommen, decodiert und mit einem erwarteten Sollsignal verglichen. Falls Antwortsignal und Sollsignal übereinstimmen, also bei einer erfolgreichen Authentifikation, werden die Türen und gegebenenfalls auch die Wegfahrsperre entriegelt.

In dem Deutschen Patent DE 195 46 171 C1 ist ein solches Diebstahlschutzsystem für den Einsatz in einem KFZ beschrieben, bei dem über eine magnetische Kopplung zwischen einem fahrzeugseitigen Transceiver und einem mobilen Transponder eine bidirektionale Datenkommunikation aufgebaut wird. Die Datenkommunikation erfolgt dadurch, dass ein von dem Transceiver magnetisch erzeugtes Wechselfeld entsprechend den zu übertragenden Daten ein- und ausgeschaltet wird. Zu diesem Zwecke weist der Transceiver einen induktiven Antennenschwingkreis auf, der über eine Treiberschaltung erregt wird. Die Induktivität des Antennenschwingkreises des Transceivers ist magnetisch mit einer entsprechenden Induktivität des Antennenschwingkreises des Transponders gekoppelt.

Ein System zur passiven Zugangskontrolle weist z.B. fahrzeugseitig ein Steuergerät sowie typischerweise mehrere im KFZ verteilte induktive Antennen auf, die mit dem Steuergerät über meist unterschiedlich lange Verbindungsleitungen verbunden sind. Diese induktiven Antennen werden durch einen Schaltregler innerhalb des Steuergeräts angeregt. Problematisch daran ist, dass mit zunehmender Länge der Verbindungsleitungen auch deren parasitäre Kapazitäten und Induktivitäten größer werden, so dass diese nicht mehr vernachlässigbar sind. Neben dieser Eigenkapazität und der Eigeninduktivität der Verbindungsleitungen ist auch ein kapazitiver Anteil zu berücksichtigen, der sich aus der Art und der Verlegung der Verbindungsleitungen im Kraftfahrzeug ergibt, beispielsweise durch den Einfluss der Fahrzeugkarosserie.

Ein weiteres Problem ergibt sich aus der Art der Sendeantennen, die idealerweise zwar möglichst identisch ausgebildet sein sollten, die in der konkreten technischen Implementierung, z.B. aufgrund der verwendeten Herstellungstechnologie, faktisch aber eine mehr oder weniger große Variation der Antennenimpedanz aufweisen.

Problematisch daran ist die Ansteuerung der Vielzahl der Antennen. Üblicherweise weist das Steuergerät einen Schaltregler zur Ansteuerung aller Sendeantennen innerhalb des KFZs auf. Dieser Schaltregler und der mit dem Schaltregler verbundene Ausgangstreiber sind dazu ausgelegt, alle Sendeantennen eines KFZs mit einem vorgegebenen, möglichst gleichen Signalpegel anzusteuern, wobei geringe Spannungs- bzw. Stromschwankung durch den Schaltregler ausgeregelt werden können. Aufgrund der mitunter stark schwankenden Antennenimpedanzen schwankt aber auch der durch die verschiedenen Antennen fließende Strom und damit auch die an der Sendeantenne abfallende Spannung entsprechend stark. Insbesondere im KFZ-Bereich kann die Antennenimpedanz bis zu einigen zehn Ohm variieren, so dass der von dem Regelverstärker zu treibende Antennenstrom durch die Antennen infolge dessen bis zu einigen Ampere variieren kann. Das bedeutet, dass der Schaltregler dazu ausgelegt sein muss, eine Regelstabilität über einen relativ großen Lastbereich sicherzustellen. Der Schaltregler muss also dazu ausgelegt sein, Ausgangsspannungen im Bereich von einigen wenigen Volt bis zu einigen zehn Volt schalten zu können.

Das besondere Problem besteht hier darin, dass der Schaltregler dadurch in seiner Regelstabilität instabil werden kann, was insgesamt dazu führt, dass eine funktionierende Regelung nicht mehr gewährleistet ist. Es besteht daher der Bedarf, einen Schaltregler bereitzustellen, der auch bei sehr stark schwankenden Eingangsspannungen die für die Antenne bereitgestellte Ausgangsspannung und damit den Antennenstrom möglichst exakt regeln kann.

In dem US-Patent US 5,903,452 ist ein Schaltregler mit einer Regelschaltung beschrieben, die für die Regelung ein Kompensationssignal bereitstellt. Die Spannungsrampe des Kompensationssignals ist hier abhängig von einem an der Antennenspule direkt abgegriffenen und rückgekoppelten Spulenstrom, so dass die Regelung hier direkt auf dem Spulenstrom basiert.

Vor diesem Hintergrund ist es die Aufgabe der vorliegenden Erfindung, eine alternative, insbesondere verbesserten Regelung bei einem Schaltregler bereitzustellen, der vor allem ein möglichst stabiles Regelverhalten auch bei stark schwankenden Ausgangsspannungen bereitstellt.

Erfindungsgemäß wird zumindest eine der oben genannten Aufgaben durch einen Schaltregler mit den Merkmalen des Patentanspruchs 1 und/oder durch eine Transceiverschaltung mit den Merkmalen des Patentanspruchs 18 und/oder durch ein schlüsselloses Zugangskontrollsystem mit den Merkmalen des Patentanspruchs 26 gelöst.

Demgemäß ist vorgesehen:

- Ein Schaltregler zur Ansteuerung von Sendeantennen variabler Impedanz, insbesondere von Sendeantennen eines schlüssellosen Zugangsberechtigungssystems in oder für ein Fahrzeug, mit einem Eingangsanschluss, in den ein an der Sendeantenne anliegenden oder anlegbares Antennenpotenzial einkoppelbar ist, mit einer Regelschaltung, die dazu ausgelegt ist, ein Kompensationssignal als Regelgröße zur Anpassung des Antennenpotenzials an eine aktuelle Ausgangsimpedanz zu erzeugen und eine Steigung des Kompensationssignals abhängig von dem aktuellen Antennenpotenzial einzustellen.

- Eine Transceiverschaltung einer Vorrichtung zur induktiven Datenübertragung, insbesondere einer Vorrichtung zur schlüssellosen Zugangskontrolle in oder für ein Fahrzeug, mit mindestens einem Antennenschwingkreis zum zumindest drahtlosen Aussenden von Sendesignalen, mit einem erfindungsgemäßen Schaltregler, der dazu ausgelegt ist, das Antennenpotenzials derart zu regeln, das der durch die Sendeantenne fließende Antennenstrom zwischen einem vorgegebenen unteren Schwellenwert und einem vorgegebenen oberen Schwellenwert sich zickzackförmig hin- und herbewegt.

- Ein schlüsselloses Zugangskontrollsystem in oder für ein Fahrzeug, mit mindestens einer fahrzeugseitigen Antennenschaltung, mit mindestens einer fahrzeugseitigen erfindungsgemäßen Transceiverschaltung, die zur Ansteuerung der Antennenschaltungen mit diesen über jeweilige Verbindungsleitungen verbunden ist, mit mindestens einem Transponder, der dazu ausgelegt ist, bei einer Annäherung an die fahrzeugseitigen Transceiverschaltung mit dieser drahtlos in datenkommunikative Verbindung zu treten.

Die Ausgangsimpedanz umfasst dabei v.a. die Antennenimpedanz, aber auch parasitäre Impedanzen, beispielsweise die Zuleitungen.

Die der vorliegenden Erfindung zugrunde liegende Idee besteht darin, bei einer Antennenschaltung sowohl eine Eingangsspannung sowie eine Ausgangsspannung, die die Steigung eines Spulenstroms bestimmt, zu messen. Auf deren Basis wird eine Spannungsdifferenz berechnet, welche die Steilheit einer Rampe eines internen Kompensationssignals innerhalb des Schaltreglers bestimmt. Auf der Basis dieses internen Kompensationssignals wird ein Konstantstrom ermittelt, der zur Reduzierung des Einflusses des Spannungsabfalls über der Antennenspule zu dem Ausgangssignal hinzu addiert wird. Man erhält damit insgesamt ein sehr stabiles Regelverhalten aufgrund eines konstanten Tastverhältnisses, das heißt, man gewinnt dadurch eine sehr stabile Ausgangsspannung über der Antennenspule und somit einen konstanten Antennenstrom.

Auf Grund des sehr stabilen, konstanten Tastverhältnisses ergibt sich vorteilhafterweise auch ein verbessertes EMV-Verhalten bei Verwendung eines erfindungsgemäßen Schaltreglers bzw. einer entsprechenden Transceiver-schaltung mit einem solchen Schaltregler.

Vorteilhafte Ausgestaltungen und Weiterbildungen der Erfindung ergeben sich aus den weiteren Unteransprüchen sowie aus der Beschreibung unter Bezugnahme auf die Zeichnungen.

In einer bevorzugten Ausgestaltung der Erfindung ist der Schaltregler als Hochsetzsteller oder als Tiefsetzsteller ausgebildet.

In einer weiteren bevorzugten Ausgestaltung ist eine Subtrahierschaltung vorgesehen, die aus dem Antennenpotenzial und einem ersten Versorgungspotenzial durch Differenzbildung ein Differenzsignal erzeugt. Vorzugsweise weist die Subtrahierschaltung einen ersten Differenzverstärker auf. Typischerweise, jedoch nicht notwendigerweise, weist die Subtrahierschaltung auch zwei Widerstandsspannungsteiler auf, deren resistive Elemente vorzugsweise gleich dimensioniert sind.

In einer bevorzugten Weiterbildung der Erfindung ist ein Spannungsrampengenerator vorgesehen, der aus dem Differenzsignal ein rampenförmiges Spannungssignal erzeugt. Vorzugsweise hängt dabei die Steigung des rampenförmigen Spannungssignals von der Amplitude des Differenzsignals ab.

In einer bevorzugten Ausgestaltung weist der Spannungsrampengenerator einen zweiten Differenzverstärker zur Erzeugung eines konstanten Stroms aus dem Differenzsignal sowie einen ausgangsseitig dem zweiten Differenzverstärker nachgeschalteten Kondensator auf, der getriggert durch ein Takt-signal auf- und entladen wird.

In einer weiteren Ausgestaltung weist der Spannungsrampengenerator eine Korrekturstromquelle auf, die einen dem Stromsignal überlagernden Korrekturstrom erzeugt. Dieser Korrekturstrom ist typischerweise (signifikant) geringer als der durch den zweiten Differenzverstärker erzeugte konstante Strom. Dieser Korrekturstrom dient dem Feintuning zur Erzeugung eines weitestgehend homogenen rampenförmigen Signals, welches also eine möglichst einheitliche Steigung aufweisen soll.

In einer Weiterbildung der Erfindung ist ein Fehlerverstärker vorgesehen, der das Antennenpotenzial mit einem Referenzpotenzial vergleicht und der abhängig von dem Vergleich ein Steuersignal erzeugt.

In einer Weiterbildung ist vorgesehen, die durch Verknüpfung des rampenförmigen Spannungssignal mit dem im Fehlerverstärker erzeugten Steuersignal das Kompensationssignal erzeugt.

In einer Weiterbildung ist eine Vergleichereinrichtung vorgesehen, die das Kompensationssignal mit einem von dem Antennenstrom abgeleiteten Referenzsignal vergleicht und ausgangsseitig ein von diesem Vergleich abhängiges Korrektursignal erzeugt. Vorzugsweise ist der Vergleichereinrichtung ein Latch nachgeschaltet, welches das von der Vergleichereinrichtung erzeugte Korrektursignal zwischenspeichert. Das Latch ist zum Beispiel als Flip-Flop-Schaltung, insbesondere als RS-Flip-Flop, ausgebildet und wird vorzugsweise durch ein internes Taktsignal getriggert.

In einer bevorzugten Weiterbildung der Erfindung ist der Vergleichereinrichtung ausgangsseitig zumindest ein steuerbarer Schalter, z.B. ein MOSFET, nachgeschaltet, der steuerseitig durch ein von der Vergleichereinrichtung bereitgestelltes oder davon abgeleitetes Steuersignal ansteuerbar ist und der dazu ausgelegt ist, abhängig von seiner Ansteuerung durch das Steuersignal das Ausgangspotenzial auf einen vorgegebenen Spannungsbereich zu regeln.

In einer ersten Ausgestaltung ist ein erster Rückkopplungspfad vorgesehen ist, über den ein durch die Sendeantenne fließender Antennenstrom in den Schaltregler rückkoppelbar ist. Ferner kann zusätzlich oder alternativ ein zweiter Rückkopplungspfad vorgesehen sein, über den das an der Sendeantenne anliegende oder anlegbare Antennenpotenzial in den Schaltregler rückkoppelbar ist.

In einer bevorzugten Ausgestaltung der Transceiverschaltung sind der Schaltregler und die Treiberschaltung dazu ausgelegt, den durch den Antennenschwingkreis fließenden Antennenstrom so anzusteuern, dass bei einer Signalübertragung das von der Sendeantenne gesendete Sendesignal bei einer vorgegebenen Frequenz ausgesendet wird.

In einer Ausgestaltung ist mindestens eine Treiberschaltung vorgesehen, die zwischen einem ersten Versorgungsanschluss mit einem ersten Versorgungspotenzial und einem zweiten Versorgungsanschluss mit einem zweiten Versorgungspotenzial angeordnet ist und die ausgangsseitig mit dem Antennenschwingkreis verbunden ist. Typischerweise, jedoch nicht notwendigerweise, weist der erste Versorgungsanschluss ein positives Versorgungspotenzial und der zweite Versorgungsanschluss ein Bezugspotenzial, insbesondere das Potenzial der Bezugsmasse, auf.

In einer bevorzugten Ausgestaltung der Erfindung ist die Sendeantenne als Spulenantenne mit Ferritkern ausgebildet. Vorzugsweise weist die Sendeantenne zumindest eine induktive Sendeantenne zum Senden von Sendesignalen auf. In einer ersten Ausgestaltung ist die Sendeantenne als LCR-Reihenschwingkreis ausgebildet, bei dem zumindest ein kapazitives Element, zumindest ein induktives Element und zumindest ein resistives Element in Reihe zueinander angeordnet sind. In einer dazu alternativen, zweiten Ausgestaltung ist die Sendeantenne als LCR-Parallelschwingkreis ausgebildet, bei dem zumindest ein kapazitives Element und zumindest ein induktives Element parallel zueinander angeordnet sind.

Die Erfindung wird nachfolgend anhand der in den Figuren der Zeichnung angegebenen Ausführungsbeispiele näher erläutert. Es zeigen dabei:

Fig. 1     ein allgemeines Blockschaltbild einer erfindungsgemäßen Transceiverschaltung;

Fig. 2     ein detaillierteres Blockschaltbild einer erfindungsgemäßen Transceiverschaltung mit erfindungsgemäßem Schaltregler;

Fig. 3     ein allgemeines Blockschaltbild für einen erfindungsgemäßen Schaltregler;

Fig. 4     ein detailliertes Schaltbild eines ersten Schaltungsblocks des erfindungsgemäßen Schaltreglers aus Fig. 3;

Fig. 5     ein detailliertes Schaltbild eines zweiten Schaltungsblocks des erfindungsgemäßen Schaltreglers aus Fig. 3;

Fig. 6     ein detailliertes Schaltbild eines dritten Schaltungsblocks des erfindungsgemäßen Schaltreglers aus Fig. 3;

Fig. 7     ein detailliertes Schaltbild eines vierten Schaltungsblocks des erfindungsgemäßen Schaltreglers aus Fig. 3;

Fig. 8     ein Signal-Zeit-Diagramm zur Veranschaulichung der Signale eines erfindungsgemäßen Schaltreglers;

Fig. 9     an Hand eines Blockschaltbildes die Anwendung einer erfindungsgemäßen Transceiverschaltung bei einem Kraftfahrzeug.

In den Figuren der Zeichnung sind gleiche und funktionsgleiche Elemente, Merkmale und Signale - sofern nichts Anderes angegeben ist- mit denselben Bezugzeichen versehen.

Die Erfindung bezieht sich auf eine vorzugsweise voll integrierte Schaltungsanordnung zum Einstellen der für einen stabilen Regelbetrieb eines Schaltreglers notwendigen Kompensationsrampe eines strombetriebenen Schaltreglers, wie zum Beispiel eines Hochsetzstellers. Solche Schaltregler werden in der Literatur häufig auch als CCM-(CCM) = continous current mode Boost-Converter bezeichnet. Um ein möglichst stabiles Regelverhalten des Schaltreglers und damit ein konstantes Tastverhältnis zu erhalten, muss das für den Schaltregler notwendige Verhältnis zwischen dem aktuellen Antennenstrom ($\Delta IA/\Delta t$) sowie der internen Rampe des Kompensationssignals geeignet eingestellt werden. Aufgrund der eingangs erwähnten zusätzlichen Bedingung, einen möglichst großen Bereich der Antennenimpedanz (im Allgemeinen zwischen 1 Ohm bis 40 Ohm) einsetzen zu können, kann der z.B. als Hochsetzsteller ausgebildete Schaltregler nicht mit einer fest vorgegebenen, fixen Kompensationsrampe arbeiten, sondern muss in Abhängigkeit der Antenne und dabei insbesondere der Antennenimpedanz seine interne Kompensationsrampe selbstständig anpassen. Mittels des erfindungsgemä-ßen Schaltreglers lässt sich dies auf sehr elegante und einfache Weise realisieren, wobei dadurch ein weitestgehend stabiles Regelverhalten auch bei stark variierenden Antennenimpedanzen möglich ist.

Die in der vorliegenden Patentanmeldung dargestellte Erfindung geht dabei zunächst von folgenden Grundlagen aus. Die nötige Ausgangsspannung VOUT ergibt sich aus den folgenden Gleichungen:

$$VOUT = 2 \cdot IA \cdot ZA + 2 \cdot Vswitch \qquad (1),$$

$$VOUT = \frac{VBB - IA \cdot RL}{1 - D} - VD - VDS \cdot \frac{D}{1 - D} \qquad (2),$$

wobei mit IA der durch die Sendeantenne fließende Antennenstrom IA, mit ZA die Antennenimpedanz und mit Vswitch die über dem zur Antenne in Reihe geschalteten Schalter abfallende Spannung bezeichnet ist.

Die abfallende Rampe $\Delta IL$ des Spulenstroms ergibt sich dann wie folgt:

$$\Delta IA(-) = \frac{VOUT + VD + IL \cdot RL - VBB}{L} \cdot T_{OFF} \qquad (3).$$

Damit ergibt sich das Verhältnis des Spulenstroms IL zu der Kompensation wie folgt:

$$\frac{1}{2} \Delta I_L (-) \leq MC \; ideal \; \Delta IL \; (-) = MC \qquad (4).$$

Durch Messung des Spulenstroms wird intern im Spannungsregler folgende Spannungsrampe $\Delta V/\Delta Z$ + abgebildet:

$$\frac{\Delta V}{\Delta t} = \frac{R_{SENSE}}{L \cdot I_{SENSE\_RATIO}} \cdot (VOUT - VBB) + \frac{R_{SENSE}}{L \cdot I_{SENSE\_RATIO}} \cdot (ILRL + VD) \quad (5)$$

Die durch den erfindungsgemäßen Schaltregler zu realisierende Schaltung soll damit die folgende Gleichung als Kompensationsrampe abbilden:

$$ML = \frac{\Delta V_c}{\Delta t} = \frac{R_U R_3}{R_O R_1 R_2 C} \cdot (VOUT - VBB) + \frac{R_3}{R_2 C} \cdot ICOR \qquad (6).$$

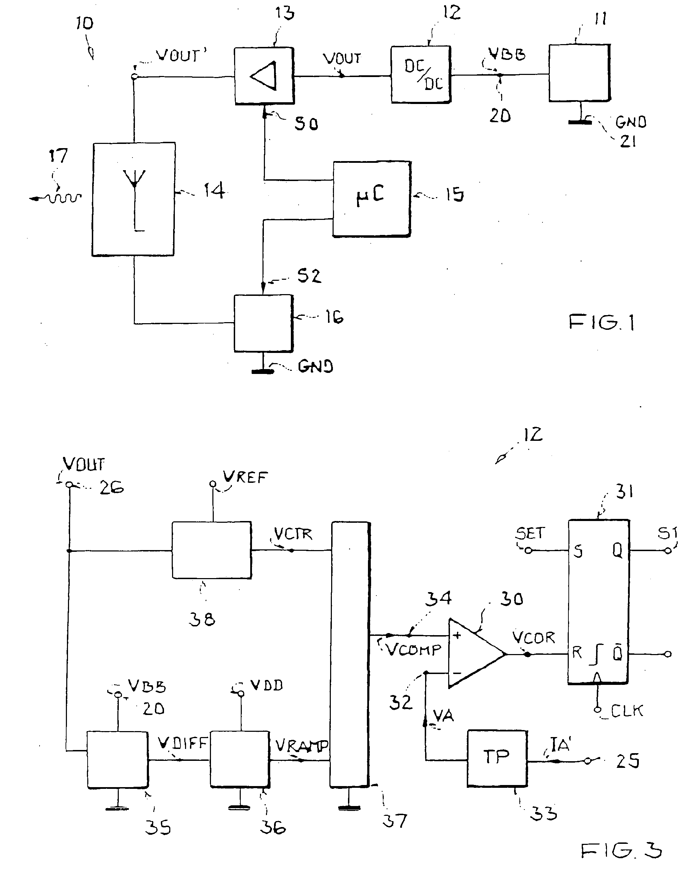

Fig. 1 zeigt ein allgemeines Blockschaltbild einer erfindungsgemäßen Transceiverschaltung. Die Transceiverschaltung ist hier mit Bezugzeichen 10 bezeichnet. Die Transceiverschaltung 10 weist eine Energieversorgung 11, einen Schaltregler 12, eine Treiberschaltung 13 sowie eine Antennenschaltung 14 auf.

Die Energieversorgungseinrichtung 11 ist hier als Spannungsversorgung ausgebildet und enthält einen ersten Versorgungsanschluss 20 und einen zweiten Versorgungsanschluss 21. An dem ersten Versorgungsanschluss 20 ist ein erstes Versorgungspotenzial VBB, beispielsweise ein positives Batteriepotenzial VBB abgreifbar, während an dem zweiten Versorgungsanschluss 21 ein zweites Versorgungspotenzial GND, beispielsweise ein Bezugspotenzial GND, anliegt. Die Energieversorgung 11 ist dazu ausgelegt, die gesamte Transceiverschaltung 10 mit Energie, zum Beispiel mit einer Versorgungsspannung (VBB - GND), zu versorgen.

Der mit der Energieversorgung 11 verbundene Schaltregler 12 erzeugt ausgangsseitig ein spannungsgeregeltes Ausgangsspannungssignal VOUT, welches über die Treiberschaltung 13 entsprechend verstärkt wird und als verstärktes geregeltes Ausgangspotenzial VOUT' versorgungsseitig an der Antennenschaltung 14 anliegt. Wird die Antennenschaltung 14 von diesem Ausgangspotential VOUT' angeregt, dann sendet sie entsprechend der Frequenz der Anregung ein frequenzmoduliertes Sendesignal 17.

Die Transceiverschaltung 10 weist vorzugsweise eine Steuereinrichtung 15, beispielsweise einen Mikrocontroller, einen Mikroprozessor oder eine fest verdrahtete Logikschaltung (z.B. FPGA, PLD, etc.), auf, die die Treiberschaltung 13 mit einem Steuersignal S0 ansteuert. Insbesondere wenn die Transceiverschaltung 10 zur Ansteuerung mehrerer Antennenschaltungen 14 vorgesehen ist, ist es vorteilhaft, dass sie eine Auswahleinrichtung 16 aufweist, die über ebenfalls von der Steuereinrichtung 15 bereitgestellte Steuersignale S2 angesteuert wird und die abhängig von dieser Ansteuerung jeweils eine oder auch mehrere der Antennenschaltungen 14 aktiviert, sodass die jeweils aktivierte Antennenschaltung 14 jeweils über den Schaltregler 12 bzw. die Treiberschaltung 13 angeregt werden kann.

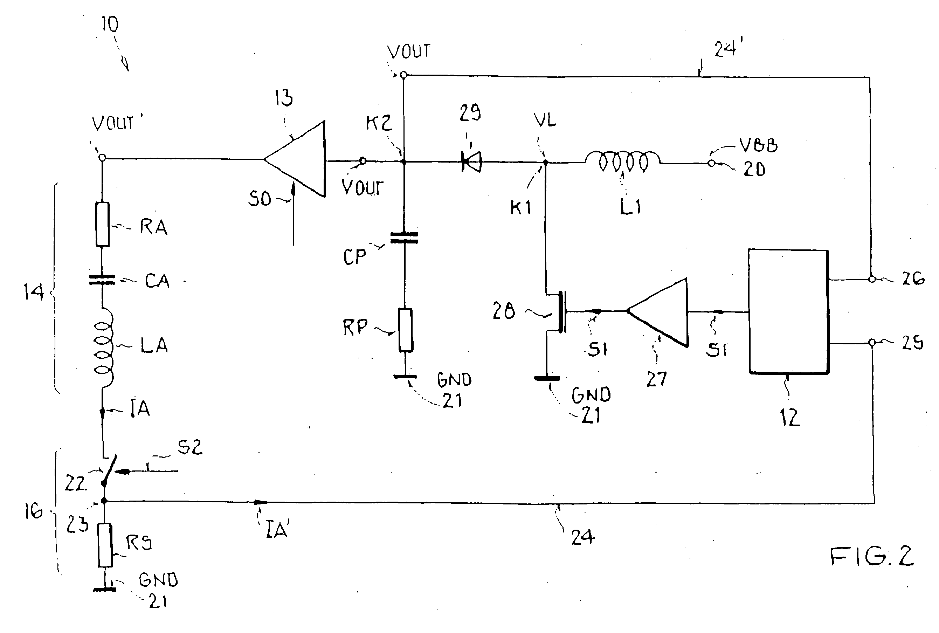

Fig. 2 zeigt ein detaillierteres Blockschaltbild einer erfindungsgemäßen Transceiverschaltung 10. Es sei angenommen, dass die Antennenschaltung 14 der Transceiverschaltung 10 als Spulenantenne mit Ferritkern ausgebildet ist. In der Fig. 2 ist das Ersatzschaltbild einer solchen Spulenantenne dargestellt. Demgemäß ist die Antennenschaltung 14 als LCR-Reihenschaltung mit einer Induktivität LA, einer Kapazität CA und einem Widerstand RA gebildet. Diese Antennenschaltung 14 wird von dem Schaltregler 12 über die Treiberschaltung 13, die hier als steuerbarer Treiber 13 ausgebildet ist, angesteuert.

Die Auswahleinrichtung 16 enthält einen steuerbaren Schalter 22 sowie einen Shunt-Widerstand RS, die zwischen der Antennenschaltung 14 und dem zweiten Versorgungsanschluss 21 in Reihe geschaltet sind. Für den Fall, dass der Schalter 22 geschlossen ist und die Antennenschaltung 14 auf diese Weise durch das Ausgangssignal VOUT' angeregt wird, fließt ein Antennenstrom IA durch die Antennenschaltung 14. Der dann fließende Antennenstrom IA' wird an einem Abgriff 23 zwischen dem geschlossenen Schalter 22 und dem Shunt-Widerstand RS abgegriffen und über einen Rückkopplungszweig 24 einem ersten Eingang 25 des Schaltreglers 12 zugeführt.

In einen zweiten Eingang 26 des Schaltreglers 12 wird das geregelte Ausgangsspannungssignal VOUT, welches gleichsam dem steuerbaren Treiber 13 zugeführt wird, eingekoppelt.

Der Schaltregler 12 erzeugt auf der Basis dieser Signale VOUT, IA' ein ausgangsseitiges Steuersignal S1, S1', welches über einen Gate-Treiber 27 den Steueranschluss eines steuerbaren Schalters 28, beispielsweise eines MOSFETs, ansteuert. Die gesteuerte Strecke des steuerbaren Schalters 28 ist zwischen dem zweiten Versorgungsanschluss 21 und über einen ersten Knoten K1, eine Diode 29 und einem zweiten Knoten K2 mit dem Eingang des Treibers 13 verbunden. Die Anode der Diode 29 ist über den ersten Knoten K1 und einer Induktivität L1 mit dem ersten Versorgungsanschluss 20 und damit mit dem Batteriepotenzial VBB verbunden. Abhängig von der Ansteuerung des steuerbaren Schalters 28 und damit der Taktung durch den Schalter 28 wird dem Treiber 13 also das geregelte Ausgangspotenzial VOUT zugeführt. Dieses noch nicht verstärkte Ausgangspotenzial VOUT wird an dem Knoten K2 abgegriffen und über einen zweiten Rückkopplungszweig 24' dem zweiten Eingang des Schaltreglers 12 zugeführt wird. Dieser Knoten K2, an dem das Ausgangssignal VOUT abgreifbar ist, ist zur Pufferung des Ausgangssignals VOUT über einen Kondensator CP und einen Widerstand RP mit dem zweiten Versorgungsanschluss 21 verbunden.

In der Fig. 2 ist die Steuereinrichtung 15 nicht dargestellt. Ferner ist dort der besseren Übersichtlichkeit halber lediglich eine einzelne Antennenschaltung 14, Komparator 13 und Schalter 22 dargestellt. Es versteht sich von selbst, dass je nach Anzahl der verwendeten Antennen eine entsprechende Anzahl der Elemente 13, 14, 22 vorgesehen ist, wobei in die Elemente 13, 22 z.B. über eine (in der Fig. 2 nicht dargestellte) Multiplexerschaltung von der Steuereinrichtung 15 jeweils aktiviert bzw. deaktiviert werden können.

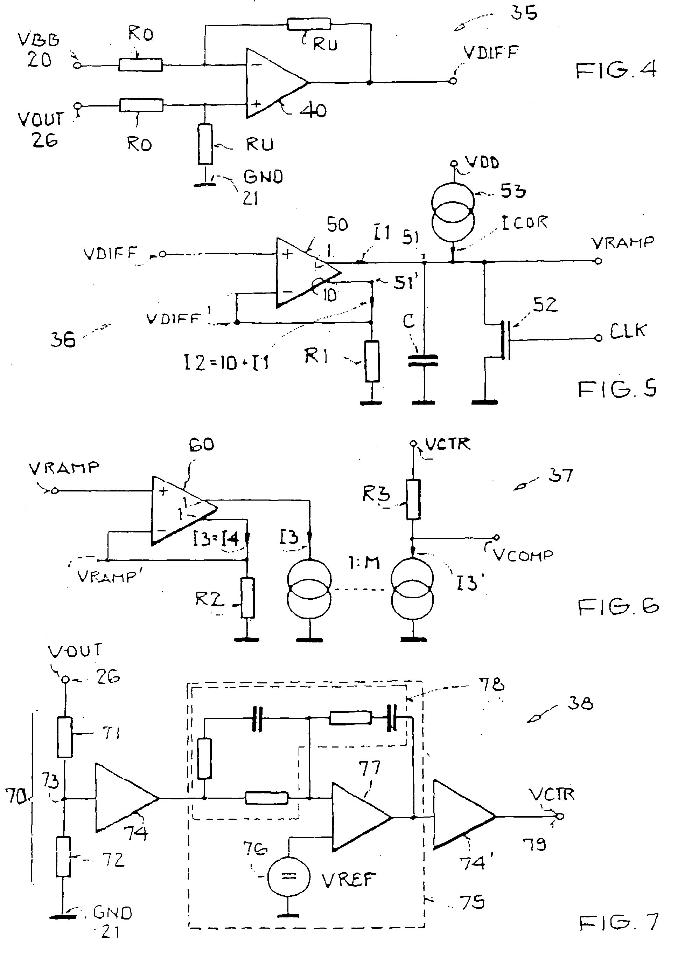

Fig. 3 zeigt an Hand eines allgemeinen Blockschaltbildes den Aufbau eines erfindungsgemäßen Schaltreglers, wie er zum Beispiel in den Transceiverschaltungen in den Fig. 1 oder 2 verwendet werden kann.

Wie bereits anhand der Fig. 2 dargelegt wurde, weist der erfindungsgemäße Schaltregler 12 Eingangsanschlüsse 25, 26 auf, über welche einerseits ein Eingangsstromsignal IA' und andererseits ein Ausgangsspannungssignal VOUT in den Schaltregler 12 als Regelgröße einkoppelbar sind. Der Schaltregler 12 weist ferner in bekannter Weise eine als Komparator ausgebildete Vergleichereinrichtung 30 sowie ein der Vergleichereinrichtung 30 nachgeschaltetes Latch 31, beispielsweise ein RS-Flip-Flop 31, auf.

Das über den Eingang 25 in den Schaltregler 12 eingekoppelte Antennenstromsignal IA' wird mittels eines Spannungsteilers gemessen und als vom gemessenen Spulenstrom abhängiges Spannungssignal VA einem ersten Eingang 32 des Komparators 30 zugeführt. Vorzugsweise wird dieses Spannungssignal VA vor dem Einkoppeln in den Komparator 30 über eine Filtereinrichtung 33, beispielsweise ein Tiefpassfilter 33, geglättet. In einen zweiten Eingang 34 des Komparators 30 wird ein Kompensationsspannungssignal VCOMP eingekoppelt. Dieses Kompensationssignal VCOMP wird im Komparator 30 mit dem Spannungssignal VA verglichen. Der Komparator 30 erzeugt abhängig von dem Vergleich ein Fehlersignal VCOR. Dieses Fehlersignal VCOR wird in ein Reset-Eingang R des Flip-Flops 31 eingekoppelt. In den Set-Eingang S des Flip-Flops wird ein Set-Signal SET eingekoppelt. Das Flip-Flop 31 wird von der ansteigenden Flanke eines Taktsignals CLK getriggert. Am Datenausgang Q des Flip-Flops 31 liegt dann das Steuersignal S 1 zur Ansteuerung des steuerbaren Schalters 28 an.

Erfindungsgemäß weist der Schaltregler 12 zur Erzeugung des Kompensationssignal VCOMP vier Schaltungsblöcke 35 - 38 auf.

Der erste Schaltungsblock 35 ist eingangsseitig mit dem Eingang 26 verbunden, sodass ihm das Antennenpotenzial VOUT zugeführt wird. Ferner wird der erste Schaltungsblock 35 über die Versorgungsanschlüsse 20, 21 mit den Versorgungspotenzialen VBB, GND versorgt. Der erste Schaltungsblock 35 ist dazu ausgelegt, ein Differenzsignal VDIFF abhängig von dem Antennenausgangssignal VOUT und dem positiven Versorgungspotenzial VBB zu erzeugen. Dieses Differenzsignal VDIFF wird in den zweiten Schaltungsblock 36, der dem ersten Schaltungsblock 35 nachgeschaltet angeordnet ist, eingekoppelt. Dem zweiten Schaltungsblock 36 wird gleichermaßen ein drittes, gegenüber dem ersten Versorgungspotenzial VBB geringeres Versorgungspotenzial VDD (z.B. ein Logikpotenzial) sowie das Potenzial der Bezugsmasse GND zugeführt. Der zweite Schaltungsblock 36 ist dazu ausgelegt, aus diesem Differenzsignal VDIFF ein Signal mit einer Spannungsrampe VRAMP zu erzeugen. Dieses Spannungsrampensignal VRAMP wird zusammen mit einem Steuersignal VCTR in den dritten Schaltungsblock 37 eingekoppelt, der daraus das Kompensationssignal VCOMP für den zweiten Eingang 34 des Komparators 30 erzeugt. Das Steuersignal VCTR wird von dem vierten Schaltungsblock 38 bereitgestellt, der dieses Steuersignal VCTR aus dem Antennenpotenzial VOUT und einem Referenzsignal VREF ableitet.

Konkrete bevorzugte Ausführungsbeispiele jeder dieser Schaltungsblöcke 35 - 38 werden nachfolgend anhand der Fig. 4 - 7 im Detail beschrieben.

Fig. 4 zeigt zunächst ein detailliertes Schaltbild des ersten Schaltungsblocks 35 des erfindungsgemäßen Schaltreglers 12 aus Fig. 3. Der erste Schaltungsblock 35 stellt gewissermaßen eine Subtrahierschaltung dar, die einen Differenzverstärker 40 sowie zwei Widerstandsspannungsteilern aufweist.

Die beiden Eingänge des Differenzverstärkers 40 sind über jeweilige Widerstände RO mit den Eingängen 26, 20 verbunden, wobei der Eingang 26 mit dem positiven Eingang des Differenzverstärkers 40 und der Versorgungseingang 20 mit dem negativen Eingang des Differenzverstärkers 40 verbunden ist. Zwischen dem negativen Eingang und dem Ausgang des Differenzverstärkers 40 ist ein weiterer Widerstand RU geschaltet. In gleicher Weise ist zwischen dem positiven Eingang des Differenzverstärkers und dem zweiten Versorgungsanschluss 21 ein gleicher Widerstand RU geschaltet.

Vorzugsweise, jedoch nicht notwendigerweise, sind die beiden eingangsseitigen Widerstände RO und die beiden Widerstände RU jeweils gleich dimensioniert. Ein eingangsseitiger Widerstand RO und ein zugehöriger Widerstand RU bilden jeweils einen Spannungsteiler für den Differenzverstärker 40. Abhängig von den in den Differenzverstärker 40 eingekoppelten Potenzialen VOUT, VBB sowie der Dimensionierung der entsprechenden Spannungsteilerwiderstände RO, RU, erzeugt der Differenzverstärker 40 ausgangsseitig das Differenzpotenzial VDIFF, welches sich in der Fig. 4 wie folgt ergibt:

$$VDIFF = C \cdot (VOUT - VBB), \qquad (7)$$

Der Faktor C hängt ab von der Dimensionierung der beiden Widerstandsspannungsteiler und ergibt sich wie folgt:

$$C = \frac{RU}{RO} \qquad (8)$$

Fig. 5 zeigt zunächst ein detailliertes Schaltbild des zweiten Schaltungsblocks 36 des erfindungsgemäßen Schaltreglers 12 aus Fig. 3, der dem ersten Schaltungsblock 35 nachgeschaltet ist. Der zweite Schaltungsblock 36 fungiert als Spannungsrampengenerator.

Dazu wird das Differenzspannungssignal VDIFF in einen positiven Eingang eines 1:10 Differenzverstärkers 50 eingekoppelt, der an einem ersten Ausgang 51 ein erstes Stromsignal I1 und an einem zweiten Ausgang 51' ein zweites Stromsignal I2, dessen Strom dem zehnfachen Strom des ersten Stromsignals I1 entspricht, bereitstellt. Über ein gegen das Potenzial der Bezugsmasse GND geschalteten Referenzwiderstand R1 wird dieses zweite Stromsignal I2 entsprechend in ein Referenzpotenzial VDIFF' umgewandelt, welches in den negativen Eingang des Differenzverstärkers 50 rückgekoppelt wird und dort mit dem eingangsseitig eingekoppelten Differenzsignal VDIFF verglichen wird. Der Differenzverstärker 50 erzeugt somit abhängig von dem Differenzsignal VDIFF ausgangsseitig einen konstanten Strom I1.

Der zweite Schaltungsblock 36 weist ferner eine Kapazität C sowie einen steuerbaren Schalter 52 auf, die jeweils mit dem Ausgangsanschlusses 51 verbunden sind und die bezüglich des Ausgangsanschlusses 51 und des Versorgungsanschlusses 20 parallel zueinander angeordnet sind. Der steuerbare Schalter 52 wird steuerseitig von einem Taktsignal CLK angesteuert. Ist der steuerbare Schalter 52 über das Taktsignal CLK eingeschaltet, dann wird die Kapazität C über den konstanten Strom I1 aufgeladen. Bei ausgeschaltetem Schalter 52 wird der Kondensator C entladen und erzeugt somit ausgangsseitig ein Rampensignal VRAMP, welches getaktet durch das Taktsignal CLK eine Spannungsrampe definiert. Die Steigung dieser Spannungsrampe hängt im Wesentlichen von der Amplitude des Differenzsignals VDIFF und damit von dem davon abgeleiteten ersten Stromsignal I1 ab.

Zusätzlich kann der zweite Schaltungsblock 36 auch eine Korrekturstromquelle 53 aufweisen. Diese Korrekturstromquelle 53 ist dazu ausgelegt, einen Korrekturstrom ICOR zu erzeugen, der dem Stromsignal I1 überlagert wird. Dieser Korrekturstrom ICOR ist typischerweise sehr viel geringer als das Stromsignal I1.

$$ICOR \ll I1 \qquad (9)$$

Damit ergibt sich für das Rampensignal VRAMP:

$$VRAMP = \left( \frac{1}{R1 \cdot C} \cdot VDIFF + \frac{1}{C} ICOR \right) t \qquad (10)$$

Fig. 6 zeigt einen dritten Schaltungsblock 37 des erfindungsgemäßen Schaltreglers 12, der eingangsseitig dem zweiten und vierten Schaltungsblock 36, 38 nachgeschaltet angeordnet ist. Der dritte Schaltungsblock 37 weist einen 1:1 Differenzverstärker 60 auf, an dessen erstem Ausgang abhängig von dem ihm über den zweiten Schaltungsblock 36 zugeführten Rampenpotenzial VRAMP ein Stromsignal I3 bereitgestellt wird. An einem weiteren Ausgang wird entsprechend einem 1:1 Verhältnis ein Strom I4, der dem Strom I3 entspricht, bereitgestellt und einem gegen das Bezugspotenzial GND geschalteten Referenzwiderstand R2 zugeführt. Das dabei erzeugte Referenzpotenzial VRAMP' wird dem negativen Ausgang des Differenzverstärkers 60 zugeführt und mit dem Rampenpotenzial VRAMP verglichen.

Der ausgangsseitig von dem Differenzverstärker 60 erzeugte Strom I3 wird über einen 1:M Stromspiegel in einen gespiegelten Strom I3' = M * I3 auf einen weiteren Referenzwiderstand R3 gespiegelt. Dieser weitere Referenzwiderstand R3 ist außerdem gegen den Ausgang des vierten Schaltungsblocks 38 geschaltet, sodass der Referenzwiderstand R3 mit einem von dem vierten Schaltungsblock 38 bereitgestellten Steuersignal VCTR beaufschlagt wird. Auf Grund des durch den Referenzwiderstand R3 fließenden gespiegelten Stroms I3' fällt somit über dem Referenzwiderstand R3 das Potenzial VC ab:

$$VC = MC \cdot t \qquad (1)$$

ab. MC ist hier die Steigung des Rampenpotenzials VRAMP bezogen auf die Zeit t, das heißt es gilt für die Steigung MC:

$$MC = \frac{R3}{R2} \cdot VRAMP \cdot \frac{1}{t} \qquad (2)$$

Unter Berücksichtigung des vom vierten Schaltungsblock 38 bereitgestellten Steuersignals VCTR liegt somit am Ausgang 34 des dritten Schaltungsblocks 37 das Kompensationssignal VCOMP an. Das Potential dieses Kompensationssignals VCOMP ergibt sich wie folgt:

$$VCOMP = VCTR - VC \qquad (3)$$

Der dritte Schaltungsblock 37 fungiert somit als Spannungs-Strom-Umsetzer, wobei mit den Referenzwiderständen R2, R3 das Verhältnis der Spannungs-Strom-Konversion definiert eingestellt werden kann. Durch die Verknüpfung insbesondere des Referenzwiderstandes R3 mit dem Steuersignal VCTR wird die von zweitem Schaltungsblock 36 erzeugte Spannungsrampe im Rampenpotenzial VRAMP mit dem Verhältnis R3/R2 abgebildet und von dem Steuersignal VCTR abgezogen.

Fig. 7 zeigt ein detailliertes Schaltbild für den vierten Schaltungsblock des erfindungsgemäßen Schaltreglers, wie er in Fig. 3 dargestellt ist. Eingangsseitig des vierten Schaltungsblocks 38 ist ein zwischen den Anschlüssen 21, 26 angeordneter (Widerstands)-Spannungsteiler 70 mit zwei Widerständen 71, 72 vorgesehen. Am Mittelabgriff 73 des Spannungsteilers 70 wird ein von dem Antennenpotenzial VOUT unter Dimensionierung des Spannungsteilers 70 abgeleitetes Signal abgegriffen und über einen Pufferverstärker 74 einem Fehlerverstärker 75 zugeführt. Der Fehlerverstärker 75 weist in Fig. 7 einen Differenzverstärker 77 und ein Kapazitäts- und Widerstandsnetzwerk 78 auf. Ein Referenzeingang des Differenzverstärkers 77 ist mit einer Referenzspannungsquelle 76, die eine Referenzspannung VREF bereitstellt, verbunden. Vorzugsweise ist die Referenzspannung VREF nicht konstant, sondern von dem Antennenstromsignal IA' abgeleitet.

Zwischen dem zweiten Eingang des Differenzverstärkers 75 und dessen Ausgang ist das Widerstands- und Kapazitätsnetzwerk 78 angeordnet. Der Spannungsteiler 70 sowie dieses Kapazitäts- und Widerstandsnetzwerk 78 dienen der Dimensionierung des Fehlerverstärkers 75, insbesondere was dessen Stabilität und Dynamik angeht. Am Ausgang des Fehlerverstärkers 75 wird ein Steuersignal bereitgestellt, welches über einen weiteren Pufferverstärker 74' dem Ausgang 79 des vierten Schaltungsblocks als Steuersignal VCTR zugeführt wird. Dieser weitere Pufferverstärker 74' dient der Entkopplung des vierten Schaltungsblocks von dem ihm nachgeschalteten dritten Schaltungsblock 37.

Das Steuersignal VCTR ist typischerweise konstant. Das Steuersignal VCTR wird mit dem sägezahnartigen rampenförmigen Spannungssignal VRAMP überlagert. Beide Signale VCTR, VRAMP werden dabei im Wesentlichen von dem Antennenausgangssignal VOUT abgeleitet, sodass in beiden Signalen VCTR, VRAMP eine Information des Antennenausgangssignals VOUT enthalten ist. Abhängig davon wird das Kompensationssignal VCOMP, welches als Regelsignal des Schaltreglers 12 dient, erzeugt.

Bei bisher bekannten Lösungen, wie beispielsweise in dem eingangs erwähnten US-Patent US 5,903,452, wird das entsprechende Regelsignal unabhängig von dem direkt aus der Versorgungsspannung gewonnenen Antennenpotenzial VOUT erzeugt. Dort wird das durch die Antenne fließende Stromsignal in eine geeignet ausgebildete Regelschaltung eingekoppelt, dass heißt es wird das Antennenstromsignal (welches in der vorliegenden Patentanmeldung dem Strom IA' entspricht) manipuliert und als Regelsignal dem Komparator 30 zugeführt. Im Unterschied hierzu wird bei der vorliegenden Erfindung mittels des erfindungsgemäßen Schaltreglers 12 das Kompensationssignal VCOMP manipuliert und als Regelgröße dem Komparator 30 zugeführt. Erfindungsgemäß erfolgt die Regelung hier also in einem anderen Pfad und somit bezogen auf einem anderen Eingang des Kompressors 30.

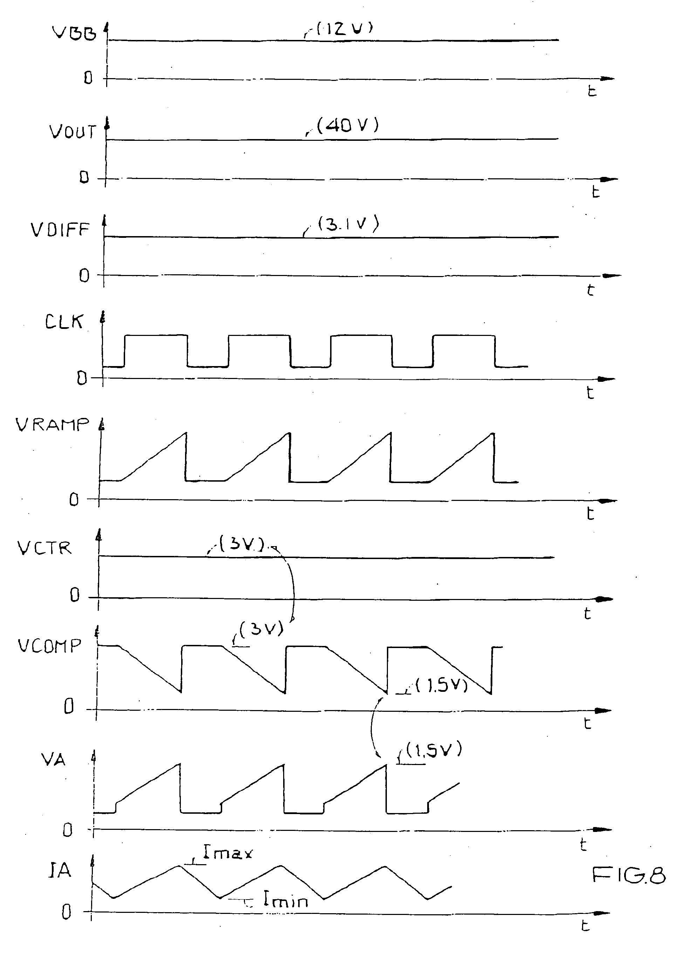

Fig. 8 zeigt ein Signal-Zeit-Diagramm der internen und externen Signale des erfindungsgemäßen Schaltreglers sowie der Transceiverschaltung, wie sie an Hand der Fig. 1 - 7 beschrieben wurden.

Es sei angenommen, dass das erste Versorgungspotenzial VBB, welches beispielsweise von der Batterie bereitgestellt wird, weitestgehend konstant ist, beispielsweise VBB = 12 Volt. Mittels des erfindungsgemäßen Schaltreglers wird auch das Antennenpotenzial VOUT weitestgehend konstant gehalten, beispielweise auf VOUT = 40 Volt. Mittels des ersten Schaltungsblocks 35 wird im Wesentlichen durch Vergleichen des ersten Versorgungspotenzials VBB und des Antennenpotenzials VOUT ein Differenzsignal VDIFF erzeugt, wobei die Amplitude des Differenzsignals VDIFF auch von der Dimensionierung der Spannungsteilerwiderstände RO, RU abhängt. Es sei angenommen, dass im vorliegenden Fall das Differenzsignal VDIFF ungefähr 3,1 Volt beträgt. Dieses Differenzsignal VDIFF wird im zweiten Schaltungsblocks 36 dazu herangezogen, eine Spannungsrampe für das Rampensignal VRAMP zu generieren. Das Erzeugen dieser Spannungsrampe VRAMP erfolgt dabei getriggert durch ein Taktsignal CLK. Bei einem hohen logischen Pegel des Taktsignals CLK wird des Transistors 52 eingeschaltet und das Rampensignal VRAMP weist einen ansteigenden Signalverlauf auf. Wird der Transistor 52 über das Taktsignal CLK ausgeschaltet, fällt das Rampensignal VRAMP wieder auf Null und bleibt solange konstant, solange der Transistor 52 ausgeschaltet bleibt. Es wird somit ein sägezahnförmiges, unterbrochenes Rampensignal VRAMP erzeugt. Wesentlich dabei ist, dass die Steigung der ansteigenden Flanke des Rampensignals VRAMP abhängt von der Amplitude des Differenzsignals VDIFF. Dieses Rampensignal VRAMP, welches nach wie vor eine Funktion des Antennenausgangssignals (sowie eines Taktsignals CLK) ist, wird zusammen mit einem Steuersignal VCTR dazu verwendet, das Kompensationssignal VCOMP und daraus das Korrektursignal VCOR zu erzeugen. Dieses Kompensationssignal VCOMP entspricht dabei einem etwa invertieren Rampensignal VRAMP, wobei nunmehr die ansteigende Flanke zu einer abfallenden Flanke des sägezahnförmigen Signals umgewandelt wurde.

Dieses Kompensationssignal VCOMP wird mit einem von dem Antennenstrom IA' abgeleiteten Potenzial VA im Komparator 30 verglichen. Das vom Komparator 30 ausgangsseitig bereitgestellte Korrektursignal VCOR und in dem Flip-Flop 31 entsprechend verzögerte Ausgangssignal S1 dient dann der Ansteuerung eines steuerbaren Schalters 28 zur Erzeugung des entsprechend geregelten Antennenpotenzials VOUT. Auf diese Weise wird ausgangsseitig ein durch die Antenne fließender Strom IA erzeugt, der dreieckförmig zwischen einem maximalen Spulenstrom (Imax) und einem minimalen Spulenstrom (Imin ≠0 Ampere) schwankt. Der Spulenstrom IA kann somit einen maximalen Wert $I_{max}$ nicht überschreiten. Mittels des erfindungsgemäßen Schaltreglers 12 lässt sich somit eine sehr stabile Regelcharakteristik bereitstellen, wodurch auch bei sehr großen Variationen der Last und dabei insbesondere der Antennenimpedanz die Funktionsweise der erfindungsgemäßen Transceiverschaltung 10 gewährleistet bleibt.

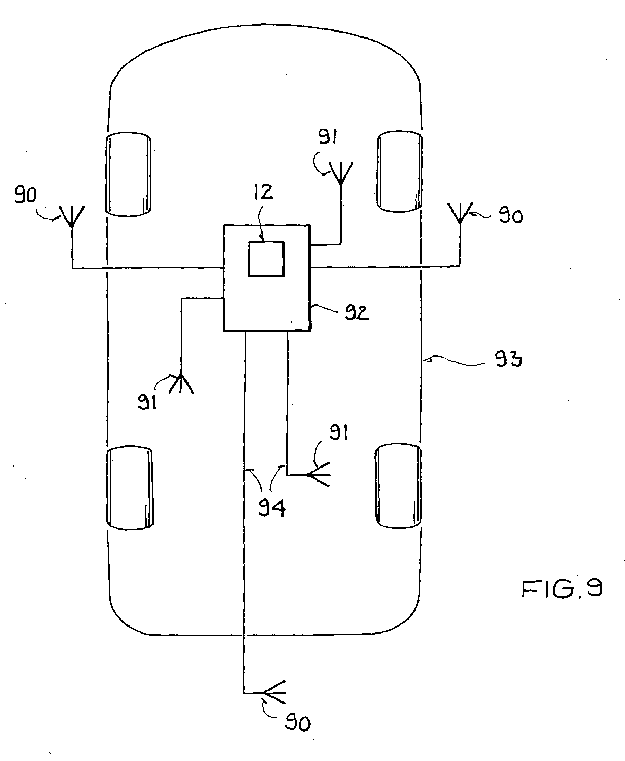

Fig. 9 zeigt an Hand eines schematischen Blockschaltbildes eine bevorzugte Anwendung einer erfindungsgemäßen Transceiverschaltung 10, wie sie beispielweise in den Fig. 1 und 2 dargestellt ist, in einem KFZ. Das KFZ ist in Fig. 9 lediglich schematisch mit Bezugszeichen 93 bezeichnet. Das KFZ weist eine erfindungsgemäße Transceiverschaltung 10 auf, die im vorliegenden Ausführungsbeispiel insgesamt sechs Antenneneinrichtungen 90, 91 aufweist. Im Beispiel in Fig. 9 sind die vom KFZ 93 nach außen sendenden (bzw. auch empfangenden) Antennen mit Bezugszeichen 90 und die ins Innere des Kraftfahrzeugs gerichteten Antennen mit Bezugszeichen 91 bezeichnet. Der mit Bezugszeichen 92 bezeichnete Schaltungsblock enthält dabei den Schaltregler sowie die entsprechenden, zur Ansteuerung der Antennen 90, 91 erforderlichen Schaltungsteile, wie zum Beispiel die Treiberschaltung, die Auswahleinrichtung und die Steuereinrichtung. Die verschiedenen Verbindungsleitungen sind mit Bezugszeichen 94 bezeichnet.

Obgleich die vorliegende Erfindung vorstehend an Hand eines konkreten Ausführungsbeispiels beschrieben wurde, sei sie nicht darauf beschränkt, sondern lässt sich selbstverständlich auf mannigfaltige Art und Weise modifizieren. Insbesondere seien die angegebenen Zahlenangaben lediglich beispielhaft zu verstehen und sollen lediglich dem besseren Verständnis der Erfindung dienen, d.h. sie sollen die Erfindung nicht dahingehend einschränken.

So sei die Erfindung auch nicht notwendigerweise auf einen als Hochsetzsteller (Boost-Converter) ausgebildeten Schaltregler beschränkt, sondern lässt sich selbstverständlich auch auf andere Schaltregler-Typen, wie beispielweise Tiefsetzsteller, erweitern. Die entsprechende Anpassung der Schaltungselemente und Schaltungsteile dieses Tiefsetzstellers ergeben sich dabei aus der Schaltungstopografie des Tiefsetzstellers.

Auch sei die Erfindung insbesondere nicht auf die an Hand der Fig. 4 - 7 dargestellten konkreten Implementierungen der Schaltungsblöcke des Schaltreglers beschränkt. Es versteht sich von selbst, dass deren Funktionen selbstverständlich auf beliebige Art und Weise modifiziert, verbessert oder anderweitig implementiert werden können, ohne dass der Fachmann hierzu erfinderisch tätig werden müsste.

Es versteht sich von selbst, dass die an Hand der vorstehenden Ausführungsbeispiele beschriebenen Schaltungsteile und -elemente auch durch andere, funktional gleich wirkende oder gleichartige Schaltungsteile ersetzt werden könnten.

Auch die Anwendung bei oder in einem KFZ sei - wie bereits eingangs erwähnt - nur beispielhaft zu verstehen.

Bezugszeichenliste

| | |
|---|---|
| C | Kapazität |
| CA | Antennenkapazität |
| CLK | Taktsignal |

| | |
|---|---|
| CP | Kondensator |
| GND | zweites Versorgungspotenzial, Bezugspotenzial |
| I1 - I4 | Ströme |
| IA, IA' | Antennenstromsignale |
| ICOR | Korrekturstrom |
| K1, K2 | Knoten, Abgriffe |
| L1 | Induktivität |
| LA | Antenneninduktivität |
| Q, Q' | Datenausgänge |
| R | Reset-Eingang |
| R1, R2, R3 | Referenzwiderstände |
| RA | Anntennenwiderstand |
| RO, RU | Spannungsteilerwiderstände |
| RP | Widerstand |
| RS | Shunt-Widerstand |
| S | Set-Eingang |
| S0, S1, S1', S2 | Steuersignale |
| SET | Set-Signal |
| VA | Antennenpotenzial |
| VBB | erstes/positives Versorgungspotenzial, Batteriepotenzial |
| VCOMP | Kompensationssignal, Kompensationspotenzial |
| VCOR | Korrektursignal, Fehlersignal |
| VCTR | Steuersignal |
| VDD | drittes Versorgungspotenzial |
| VDIFF | Differenzsignal |
| VDIFF' | Referenzsignal |
| VL | Steuersignal |
| VOUT, VOUT' | Antennenausgangssignale, Antennenpotenziale |
| VRAMP | Rampensignal, rampenförmiges Potenzial |
| VRAMP' | Referenzsignal |
| VREF | Referenzsignal |
| | |
| 10 | Transceiverschaltung, Treiber |
| 11 | Energieversorgung, Batterie |
| 12 | Schaltregler, Hochsetzsteller |
| 13 | Treiberschaltung |
| 14 | Antennenschaltung, Antennenschwingkreis |
| 15 | Steuereinrichtung, Mikrocontroller |
| 16 | Auswahleinrichtung, Multiplexer |
| 17 | Sendesignal |
| 20,21 | Versorgungsanschlüsse |
| 22 | steuerbarer Schalter |
| 23 | Abgriff |
| 24, 24' | Rückkopplungszweige |
| 25, 26 | Eingänge (des Schaltreglers) |
| 27 | Verstärker, Gate-Treiber |
| 28 | steuerbarer Schalter, MOSFET |
| 29 | Diode |
| 30 | Vergleichereinrichtung, Komparator |
| 31 | Latch, RS-Flip-Flop |
| 32 | Eingang |
| 33 | Filtereinrichtung, Tiefpass |
| 34 | Eingang |
| 35 | erster Schattungsblock |
| 36 | Zweiter Schaltungsblock |
| 37 | dritter Schaltungsblock |
| 38 | vierter Schaltungsblock |
| 40 | Differenzverstärker |

| 50 | Differenzverstärker |
|---|---|
| 51, 51' | Ausgänge des Differenzverstärkers |
| 52 | steuerbarer Schalter |
| 53 | Korrekturstromquelle |
| 60 | Differenzverstärker |
| 61 | Stromspiegel |
| 70 | Spannungsteiler |
| 71,72 | Spannungsteilerwiderstände |
| 73 | Abgriff des Spannungsteilers |
| 74, 74' | Pufferverstärker |
| 75 | Fehlerverstärker |
| 76 | Referenzspannungsquelle |
| 77 | Differenzverstärker |
| 78 | Widerstands- und Kapazitätsnetzwerk |
| 79 | Ausgang |
| 90, 91 | Antennen |
| 92 | Schaltungsblock |
| 93 | Kraftfahrzeug |
| 94 | Verbindungsleitungen |

**Patentansprüche**

1. Schaltregler (12) zur Ansteuerung von Sendeantennen (14) variabler Impedanz, insbesondere von Sendeantennen (14) eines schlüssellosen Zugangsberechtigungssystems in oder für ein Fahrzeug (93),
   mit einem Eingangsanschluss (26), in den ein an der Sendeantenne (14) anliegenden oder anlegbares Antennenpotenzial (VOUT, VOUT') einkoppelbar ist,
   mit einer Regelschaltung (35 - 38), die dazu ausgelegt ist, ein Kompensationssignal (VCOMP) als Regelgröße zur Anpassung des Antennenpotenzials (VOUT, VOUT') an eine aktuelle Ausgangsimpedanz zu erzeugen und eine Steigung des Kompensationssignals (VCOMP) abhängig von dem aktuellen Antennenpotenzial (VOUT, VOUT') einzustellen.

2. Schaltregler nach Anspruch 1,
   **dadurch gekennzeichnet,**
   **dass** der Schaltregler (12) als Hochsetzsteller oder Tiefsetzsteller ausgebildet ist.

3. Schaltregler nach wenigstens einem der vorherigen Ansprüche,
   **dadurch gekennzeichnet,**
   **dass** eine Subtrahierschaltung (35) vorgesehen ist, die aus dem Antennenpotenzial (VOUT) und einem ersten Versorgungspotenzial (VBB) durch Differenzbildung ein Differenzsignal (VDIFF) erzeugt.

4. Schaltregler nach Anspruch 3,
   **dadurch gekennzeichnet,**
   **dass** die Subtrahierschaltung (35) einen ersten Differenzverstärker (40) aufweist.

5. Schaltregler nach einem der Ansprüche 2 oder 3
   **dadurch gekennzeichnet,**
   **dass** die Subtrahierschaltung (35) zwei Widerstandsspannungsteiler (RO, RU), insbesondere zwei gleich dimensionierte Widerstandsspannungsteiler (RO, RU), aufweist.

6. Schaltregler nach wenigstens einem der Ansprüche 3 bis 5,
   **dadurch gekennzeichnet,**
   **dass** ein Spannungsrampengenerator (36) vorgesehen ist, der aus dem Differenzsignal (VDIFF) ein rampenförmiges Spannungssignal (VRAMP) erzeugt.

7. Schaltregler nach Anspruch 6,
   **dadurch gekennzeichnet,**
   **dass** die Steigung des rampenförmigen Spannungssignals (VRAMP) von der Amplitude des Differenzsignals (VDIFF) abhängt.

**8.** Schaltregler nach einem der Ansprüche 6 oder 7
**dadurch gekennzeichnet,**
**dass** der Spannungsrampengenerator (36) einen zweiten Differenzverstärker (50) zur Erzeugung eines konstanten Stroms (11) aus dem Differenzsignal (VDIFF) sowie einen ausgangsseitig dem zweiten Differenzverstärker (50) nachgeschalteten Kondensator (C) aufweist, der getriggert durch ein Taktsignal (CLK) auf- und entladen wird.

**9.** Schaltregler nach Anspruch 6 bis 8
**dadurch gekennzeichnet,**
**dass** der Spannungsrampengenerator (36) eine Korrekturstromquelle (53) aufweist, die einen das Stromsignal (11) überlagernden Korrekturstrom (ICOR) erzeugt.

**10.** Schaltregler nach wenigstens einem der vorherigen Ansprüche,
**dadurch gekennzeichnet,**
**dass** ein Fehlerverstärker (38) vorgesehen ist, der das Antennenpotenzial (VOUT) mit einem Referenzpotenzial (VREF) vergleicht und abhängig von dem Vergleich ein Steuersignal (VCTR) erzeugt.

**11.** Schaltregler nach wenigstens einem der vorherigen Ansprüche,
**dadurch gekennzeichnet,**
**dass** eine Verknüpfungsschaltung (37) vorgesehen ist, die durch Verknüpfung des rampenförmigen Spannungssignal (VRAMP) mit dem Steuersignal (VCTR) das Kompensationssignal (VCOMP) erzeugt.

**12.** Schaltregler nach wenigstens einem der vorherigen Ansprüche,
**dadurch gekennzeichnet,**
**dass** eine Vergleichereinrichtung (30) vorgesehen ist, die das Kompensationssignal (VCOMP) mit einem von dem Antennenstrom (IA) abgeleiteten Referenzsignal (VA) vergleicht und ausgangsseitig ein von diesem Vergleich abhängiges Korrektursignal (VCOR) erzeugt.

**13.** Schaltregler nach Anspruch 12
**dadurch gekennzeichnet,**
**dass** der Vergleichereinrichtung (30) ein Latch (31) nachgeschaltet ist, welches das von der Vergleichereinrichtung (30) erzeugte Korrektursignal (VCOR) zwischenspeichert.

**14.** Schaltregler nach Anspruch 13,
**dadurch gekennzeichnet,**
**dass** das Latch (31) als Flip-Flop-Schaltung (31), insbesondere ein RS-Flip-Flop (31), ausgebildet ist, welches durch ein Taktsignal (CLK) getriggert ist.

**15.** Schaltregler nach wenigstens einem der Ansprüche 12 bis 14,
**dadurch gekennzeichnet,**
**dass** der Vergleichereinrichtung (30) ausgangsseitig zumindest ein steuerbarer Schalter (28) nachgeschaltet ist, der steuerseitig durch ein von der Vergleichereinrichtung (30) bereitgestelltes oder davon abgeleitetes Steuersignal (S1) ansteuerbar ist und der dazu ausgelegt ist, abhängig von seiner Ansteuerung durch das Steuersignal (S1) das Ausgangspotenzial (VOUT) auf einen vorgegebenen Spannungsbereich zu regeln.

**16.** Schaltregler nach wenigstens einem der vorherigen Ansprüche,
**dadurch gekennzeichnet,**
**dass** ein erster Rückkopplungspfad (24) vorgesehen ist, über den ein durch die Sendeantenne (14) fließender Antennenstrom (IA') in den Schaltregler (12) rückkoppelbar ist.

**17.** Schaltregler nach wenigstens einem der vorherigen Ansprüche,
**dadurch gekennzeichnet,**
**dass** ein zweiter Rückkopplungspfad (24') vorgesehen ist, über den das an der Sendeantenne (14) anliegende oder anlegbare Antennenpotenzial (VOUT) in den Schaltregler (12) rückkoppelbar ist.

**18.** Transceiverschaltung (10) einer Vorrichtung zur induktiven Datenübertragung, insbesondere einer Vorrichtung zur schlüssellosen Zugangskontrolle in oder für ein Fahrzeug (93),

mit mindestens einem Antennenschwingkreis (14) zum drahtlosen Aussenden von Sendesignalen (17),
mit mindestens einem Schaltregler (12) nach einem der vorherigen Ansprüche, der dazu ausgelegt ist, das Antennenpotenzial (VOUT, VOUT') derart zu regeln, das der durch den Antennenschwingkreis (14) fließende Antennenstrom (IA) zwischen einem vorgegebenen unteren Schwellenwert ($I_{min}$) und einem vorgegebenen oberen Schwellenwert ($I_{max}$) sich zickzackförmig hin- und herbewegt.

**19.** Transceiverschaltung nach Anspruch 18,
**dadurch gekennzeichnet,**
**dass** der Schaltregler (12) und die Treiberschaltung (13) dazu ausgelegt sind, den durch den Antennenschwingkreis (14) fließenden Antennenstrom (IA) so anzusteuern, dass bei einer Signalübertragung das von dem Antennenschwingkreis (14) gesendete Sendesignal (17) bei einer vorgegebenen Frequenz ausgesendet wird.

**20.** Transceiverschaltung nach einem der Ansprüche 18 oder 19,
**dadurch gekennzeichnet,**
**dass** mindestens eine Treiberschaltung (13) vorgesehen ist, die zwischen einem ersten Versorgungsanschluss (20) mit einem ersten Versorgungspotenzial (VBB) und einem zweiten Versorgungsanschluss (21) mit einem zweiten Versorgungspotenzial (GND) angeordnet ist und die ausgangsseitig mit dem Antennenschwingkreis (14) verbunden ist.

**21.** Transceiverschaltung nach Anspruch 20
**dadurch gekennzeichnet,**
**dass** der erste Versorgungsanschluss (20) ein positives Versorgungspotenzial (VBB) und der zweite Versorgungsanschluss (21) ein Bezugspotenzial, insbesondere das Potenzial der Bezugsmasse (GND), aufweist.

**22.** Transceiverschaltung nach einem der Ansprüche 18 bis 21,
**dadurch gekennzeichnet,**
**dass** die Sendeantenne 14 als Spulenantenne mit Ferritkern ausgebildet ist.

**23.** Transceiverschaltung nach einem der Ansprüche 18 bis 22,
**dadurch gekennzeichnet,**
**dass** die Sendeantenne (14) zumindest eine induktive Sendeantenne (LA) zum Senden von Sendesignalen (17) aufweist.

**24.** Transceiverschaltung nach einem der Ansprüche 18 bis 23,
**dadurch gekennzeichnet,**
**dass** die Sendeantenne (14) als LCR-Reihenschwingkreis ausgebildet ist, bei dem zumindest ein kapazitives Element (CA), zumindest ein induktives Element (LA) und zumindest ein resistives Element (RA) in Reihe zueinander angeordnet sind.

**25.** Transceiverschaltung nach einem der Ansprüche 18 bis 23,
**dadurch gekennzeichnet,**
**dass** die Sendeantenne (14) als LCR-Parallelschwingkreis ausgebildet ist, bei dem zumindest ein kapazitives Element und zumindest ein induktives Element parallel zueinander angeordnet sind.

**26.** Schlüsselloses Zugangskontrollsystem in oder für ein Fahrzeug (93),
mit mindestens einer fahrzeugseitigen Antennenschaltung (90, 91),
mit mindestens einer fahrzeugseitigen Transceiverschaltung (10) nach einem der Ansprüche 18 bis 25, die zur Ansteuerung der Antennenschaltung (90, 91) mit diesen über jeweilige Verbindungsleitungen (94) verbunden ist,
mit mindestens einem Transponder, der dazu ausgelegt ist, bei einer Annäherung an die fahrzeugseitigen Transceiverschaltung (10) mit dieser drahtlos in datenkommunikative Verbindung zu treten.

FIG.1

FIG.3

FIG.2

FIG. 4

FIG. 5

FIG. 6

FIG. 7

FIG.8

FIG.9

**Europäisches Patentamt**

## EUROPÄISCHER RECHERCHENBERICHT

Nummer der Anmeldung

EP 07 01 5590

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 103 45 536 A1 (SIEMENS AG [DE]) 28. April 2005 (2005-04-28) * das ganze Dokument * ----- | 1-26 | INV. H04B1/04 G06K19/07 |
| A | EP 1 388 932 A (NEDAP NV [NL]) 11. Februar 2004 (2004-02-11) * Zusammenfassung; Anspruch 1; Abbildung 11 * ----- | 1-26 | |
| A | US 5 796 180 A (GLEHR MANFRED [DE]) 18. August 1998 (1998-08-18) * Zusammenfassung; Abbildung 1 * ----- | 1-26 | |
| D,A | DE 195 46 171 C1 (SIEMENS AG [DE]) 28. November 1996 (1996-11-28) * Zusammenfassung; Abbildung 1 * ----- | 1-26 | |

RECHERCHIERTE SACHGEBIETE (IPC)

H04B
G06K

Der vorliegende Recherchenbericht wurde für alle Patentansprüche erstellt

| Recherchenort | Abschlußdatum der Recherche | Prüfer |
|---|---|---|
| München | 18. Oktober 2007 | Kolbe, Werner |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 1 890 387 A1

**ANHANG ZUM EUROPÄISCHEN RECHERCHENBERICHT**
**ÜBER DIE EUROPÄISCHE PATENTANMELDUNG NR.**

EP 07 01 5590

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2007

| Im Recherchenbericht angeführtes Patentdokument | | Datum der Veröffentlichung | Mitglied(er) der Patentfamilie | | Datum der Veröffentlichung |
|---|---|---|---|---|---|
| DE 10345536 | A1 | 28-04-2005 | US | 2005068157 A1 | 31-03-2005 |
| EP 1388932 | A | 11-02-2004 | NL | 1021125 C2 | 23-01-2004 |
| | | | US | 2004135700 A1 | 15-07-2004 |
| US 5796180 | A | 18-08-1998 | KEINE | | |
| DE 19546171 | C1 | 28-11-1996 | FR | 2742111 A1 | 13-06-1997 |
| | | | US | 5838074 A | 17-11-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19546171 C1
- US 5903452 A